# EUROPÄISCHE PATENTSCHRIFT

(11) **EP 3 578 088 B1**
(45) Veröffentlichungstag und Bekanntmachung des Hinweises auf die Patenterteilung: **10.04.2024**
(21) Anmeldenummer: 18176152.9
(22) Anmeldetag: 05.06.2018
(51) Int. Cl.: A47J 43/00, A47J 43/04

(54) **KÜCHENGERÄT ZUM ZUMINDEST TEILWEISEN AUTOMATISIERTEN ABARBEITEN VON REZEPTEN SOWIE VERFAHREN ZUR EINKAUFSUNTERSTÜTZUNG**
KITCHEN APPLIANCE FOR AT LEAST PARTIALLY AUTOMATED COMPLETION OF RECIPES AND METHOD FOR PURCHASE SUPPORT
APPAREIL DE CUISINE DESTINÉ AU TRAITEMENT DES RECETTES AU MOINS PARTIELLEMENT AUTOMATISÉ AINSI QUE PROCÉDÉ D'AIDE À L'ACHAT

(43) Veröffentlichungstag der Anmeldung: 11.12.2019
(73) Patentinhaber: Vorwerk & Co. Interholding GmbH, 42270 Wuppertal (DE)
(72) Erfinder: Koetz, Hendrik, 58300 Wetter (DE); Kraut-Reinkober, Stefan, 51375 Leverkusen (DE); Mosebach, Andrej, 44809 Bochum (DE); Reindl, Anton, 82467 Garmisch-Partenkirchen (DE); Stach, Christiane, 42477 Radevormwald (DE); Yan, Wenjie, 40549 Düsseldorf (DE); Werhahn, Sarah, 8038 Zürich (CH); Pieper, Mirco, 42287 Wuppertal (DE)
(74) Vertreter: Bals & Vogel Patentanwälte PartGmbB

(56) Entgegenhaltungen:
- DE-A1-102012 217 004
- GB-A- 2 546 507
- US-A1- 2008 222 553
- US-A1- 2011 289 044
- US-A1- 2013 171 304

## Beschreibung

Die vorliegende Erfindung betrifft ein Küchengerät zum zumindest teilweise automatisierten Abarbeiten von Rezepten gemäß dem Oberbegriff des unabhängigen Vorrichtungsanspruchs sowie ein Verfahren zur Einkaufsunterstützung eines Benutzers eines Küchengerätes.

Aus dem Stand der Technik wie aus der US 2011/289044 A1 ist es bekannt, dass auch in Privathaushalten eine immer größere Automatisierung in unterschiedlichen Lebensbereichen stattfindet. So sind insbesondere Küchenmaschinen wie aus der GB 2 546 507 A bekannt, welche einen Benutzer durch eine zumindest teilweise Automatisierung von Rezepten unterstützen können. Dazu ist es bekannt, dass derartige Küchenmaschinen bestimmte Funktionen, wie ein Erwärmen von Speisen, in Abhängigkeit von einer Benutzereingabe durchführen können. Die Integration der Rezeptabläufe in derartige Küchenmaschinen bietet den Vorteil, dass Rezepte individuell auf die Gegebenheiten der Küchenmaschine und/oder des Benutzers zugeschnitten werden können. Dabei ist es wünschenswert, den Benutzer auch in weiteren Lebensbereichen rund um das Kochen weiter zu unterstützen.

Aus der DE 10 2012 217 004 A1 ist es beispielsweise bekannt, auf einem Smartphone ein Menü auszuwählen und anhand des Menüs eine Einkaufsliste zu erstellen. Anschließend wird das Menü auf ein Gargerät übertragen. Bei der Planung der Einkaufsliste stehen dabei jedoch beispielsweise Daten des Gargerätes nicht zur Verfügung, da dies extern durchgeführt wird. Darüber hinaus ist die Funktion der Erstellung der Einkaufsliste lediglich über einen externen Bereitstellungsdienst verfügbar, welcher entsprechend eine Anmeldung des Benutzers, eine Installation zusätzlicher Software und/oder weitere Maßnahmen des Benutzers erfordert. Daher ist es wünschenswert, dem Benutzer derartige Funktionen mit Inbetriebnahme des Küchengerätes zur Verfügung stellen zu können.

Es ist somit eine Aufgabe der vorliegenden Erfindung, die voranstehend aus dem Stand der Technik bekannten Nachteile zumindest teilweise zu beheben. Insbesondere ist es eine Aufgabe der vorliegenden Erfindung, einem Benutzer eine erweiterte Unterstützung in weiteren Lebensbereichen im Hinblick auf ein Zubereiten von Speisen zu ermöglichen, insbesondere wobei der Zugang zu derartigen Funktionen für den Benutzer vereinfacht, vorzugsweise mit Inbetriebnahme eines Küchengerätes ermöglicht, sein soll.

Die voranstehende Aufgabe wird gelöst durch ein Küchengerät mit den Merkmalen des Anspruchs 1 sowie ein Verfahren mit den Merkmalen des Anspruchs 11. Weitere Merkmale und Details der Erfindung ergeben sich aus der Beschreibung, den Unteransprüchen und den Zeichnungen. Dabei gelten Merkmale und Details, die im Zusammenhang mit dem erfindungsgemäßen Küchengerät beschrieben worden sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß weist das Küchengerät zum zumindest teilweise automatisierten Abarbeiten von Rezepten eine Funktionseinheit zum Verarbeiten von Zutaten beim Abarbeiten der Rezepte auf. Ferner umfasst das Küchengerät eine Benutzerschnittstelle zum Erfassen einer Benutzereingabe und eine integrierte Steuereinheit, durch welche in Abhängigkeit von der Benutzereingabe zumindest ein Rezept auswählbar ist und die elektrische Funktionseinheit ansteuerbar ist. Die integrierte Steuereinheit ist dabei derart ausgebildet, dass eine rezeptspezifische Zutatenliste des zumindest einen Rezeptes bestimmbar und einer externen Empfangsvorrichtung in einer Einkaufsliste über eine mit der integrierten Steuereinheit verbundene Geräteschnittstelle zur Verfügung stellbar ist.

Insbesondere handelt es sich bei dem Küchengerät um eine Küchenmaschine zum Zubereiten von Speisen. Die elektrische Funktionseinheit umfasst vorzugsweise ein elektrisch angetriebenes Rührwerk zum Durchmischen von Zutaten und/oder ein elektrisches Heizelement zum Erwärmen von Zutaten. Somit können durch die Funktionseinheit vorzugsweise einige oder sämtliche Schritte beim Abarbeiten der Rezepte automatisiert durchgeführt werden. Zum Erfassen der Benutzereingabe kann die Benutzerschnittstelle vorzugsweise eine Displayeinheit, insbesondere ein Touch-Display, und/oder einen Drehknopf umfassen. Somit kann durch die Benutzerschnittstelle zumindest ein Rezept aus einer Rezeptsammlung (die auch erweiterbar ist, siehe unten) durch die Benutzereingabe auswählbar sein. Die externe Empfangsvorrichtung kann vorzugsweise ein mobiles Endgerät, beispielsweise ein Smartphone, Tablet und/oder dergleichen, umfassen. Ferner ist es denkbar, dass die externe Empfangsvorrichtung einen Server umfasst, auf welchem die Einkaufsliste abgespeichert wird. Dabei ist es ferner denkbar, dass ein mobiles Endgerät mittelbar mit der Steuereinheit in Kommunikationsverbindung steht, indem die Daten der Einkaufsliste zunächst an einen Server gesendet werden, welcher die Daten wiederum dem mobilen Endgerät zur Verfügung stellt. Weiterhin kann die externe Empfangsvorrichtung einen Drucker umfassen, welcher mit dem Küchengerät z. B. über die externe Geräteschnittstelle in Kommunikationsverbindung bringbar ist, sodass die Einkaufsliste unmittelbar ausdruckbar ist und der Benutzer die Einkaufsliste komfortabel mitführen kann. Bei dem Drucker kann es sich vorteilhafterweise um einen kabelgebundenen Drucker handeln, welcher z. B. per USB an das Küchengerät anschließbar ist, wodurch eine schnelle und sicherer Datenübertragung sichergestellt ist. Alternativ kann es sich um einen kabellos kommunizierenden Drucker, d. h. mit WLAN-Schnittstelle oder dergleichen, handeln, der somit auch nicht direkt im Nahfeld der Küchenmaschine stehen muss. Vorzugsweise kann der Drucker über ein Netzwerk an die Geräteschnittstelle des Küchengerätes angebunden sein. Die Geräteschnittstelle kann eine Schnittstelle für eine drahtlose und/oder kabelgebundene Kommunikation umfassen. Insbesondere kann die Geräteschnittstelle eine USB-Schnittstelle, Netzwerkschnittstelle, insbesondere LAN- oder WLAN-Schnittstelle, Mobilfunkschnittstelle, insbesondere LTE-Schnittstelle, Bluetooth-Schnittstelle und/oder dergleichen aufweisen.

Unter der integrierten Steuereinheit ist insbesondere eine in das Küchengerät integrierte Steuereinheit zu verstehen. Dabei ist es denkbar, dass die integrierte Steuereinheit zumindest teilweise als eingebettetes System, d. h. insbesondere als Embedded System, ausgebildet ist, insbesondere wobei die integrierte Steuereinheit eine Schaltung aufweisen kann, um die bestimmungsgemäßen Funktionen zu erfüllen. Um die rezeptspezifische Zutatenliste zu bestimmen und in der Einkaufsliste über die Geräteschnittstelle der externen Empfangsvorrichtung zur Verfügung stellen zu können, weist die integrierte Steuereinheit vorzugsweise eine Schnittstelle zu einer Speichereinheit oder eine Speichereinheit auf. In der Speichereinheit kann die rezeptspezifische Zutatenliste, die Einkaufsliste und/oder das Rezept zwischenspeicherbar sein. Ferner weist die integrierte Steuereinheit vorzugsweise einen Prozessor auf, welcher dazu ausgebildet ist, einen Programmablauf zur Bestimmung der rezeptspezifischen Zutatenliste, insbesondere durch Analyse des Rezeptes, durchzuführen.

Die Einkaufsliste kann vorzugsweise die Zutatenliste umfassen und/oder aus der Zutatenliste gebildet sein. So ist es denkbar, dass die Einkaufsliste durch den Benutzer ergänzbar ist, sodass zusätzlich zu den Zutaten der rezeptspezifischen Zutatenliste weitere Zutaten der Einkaufsliste manuell oder automatisch hinzugefügt werden können. Ferner kann die Einkaufsliste beispielsweise eine Sortierung der Zutaten umfassen, um einem Benutzer die Orientierung im Supermarkt zu erleichtern.

Somit ist durch das erfindungsgemäße Küchengerät ein Küchengerät geschaffen, welches durch die Integration der Steuereinheit eine für den Benutzer in einfacher Art und Weise zugängliche Einheit bildet, um die Einkaufsliste zu erstellen. Es ist beispielsweise nicht notwendig, dass der Benutzer die Einkaufsliste auf einem externen Gerät erstellt, wenngleich eine Übertragung an ein solches Gerät zur komfortablen Mitnahme der Einkaufsliste zum Einkauf ermöglicht ist. Mit Inbetriebnahme des Küchengerätes kann der Benutzer somit auch - ohne Umwege oder zusätzlichen Aufwand - auf die Funktion der Erstellung der Einkaufsliste zugreifen, wobei insbesondere gerätespezifische Daten in einfacher Art und Weise zur Verfügung stehen, ohne dass ein Austausch von Daten mit einem Server notwendig ist. Insbesondere können somit beispielsweise auch gerätespezifische Nutzerdaten, Umgebungsdaten und/oder dergleichen bei der Erstellung der Zutatenliste und/oder der Einkaufsliste berücksichtigt werden.

Es ist ferner denkbar, dass bei einem erfindungsgemäßen Küchengerät die Einkaufsliste durch die integrierte Steuereinheit in Abhängigkeit von vorgegebenen Verpackungsgrößen der Zutaten erstellbar ist. Vorzugsweise können dabei die Verpackungsgrößen über die Geräteschnittstelle automatisch beziehbar sein. So ist es denkbar, dass über eine Bestimmung des Standortes Verkaufsstellen in der Nähe identifizierbar und in den Verkaufsstellen übliche oder tatsächlich vorhandene Verpackungsgrößen abrufbar sind. Unter den vorgegebenen Verpackungsgrößen können insbesondere übliche Verpackungsgrößen verstanden werden, welche in Supermärkten oder bei Bestelldiensten angeboten werden. Insbesondere können die vorgegebenen Verpackungsgrößen auch individuelle Verpackungsgrößen sein, welche durch den Benutzer vorgegeben werden oder von lokalen Anbietern über die externe Geräteschnittstelle bezogen werden können. Durch die vorgegebenen Verpackungsgrößen findet der Benutzer automatisch eine Orientierung, durch welche er im Supermarkt weiter unterstützt werden kann und ihm somit weitere Teile seiner Einkaufsplanung abgenommen werden können. Darüber hinaus kann eine Vorgabe von Verpackungsgrößen beispielsweise eine automatische Bestellung von Zutaten vereinfachen bzw. überhaupt ermöglichen. Darüber hinaus erhält der Benutzer schon bei der Zurverfügungstellung der Einkaufsliste einen Überblick, wie viel Zutaten er aufgrund von Mindestverpackungsgrößen gegebenenfalls zu viel einkaufen muss, sodass er dies in der Planung seiner weiteren Mahlzeiten berücksichtigen kann.

Vorzugsweise kann bei einem erfindungsgemäßen Küchengerät eine Speichereinheit mit der integrierten Steuereinheit in Kommunikationsverbindung bringbar sein, in welcher zumindest das ausgewählte Rezept, eine vordefinierte Rezeptsammlung und/oder die Einkaufsliste abspeicherbar ist. Dadurch können beispielsweise mehrere Rezepte nacheinander und/oder gleichzeitig ausgewählt werden und in der Speichereinheit zumindest zwischengespeichert werden. Die vordefinierte Rezeptsammlung kann insbesondere in der Speichereinheit bereits abgespeichert sein, sodass diese für den Benutzer insbesondere dauerhaft zur Verfügung steht. Insbesondere kann die integrierte Steuereinheit mit der Speichereinheit in Kommunikationsverbindung stehen. Die Speichereinheit kann eine integrierte Speichereinheit sein oder eine mit dem Küchengerät verbundene Speichereinheit. So ist es beispielsweise denkbar, dass die Speichereinheit als USB-Stick oder SD-Karte oder dergleichen mit dem Küchengerät verbunden ist. Dadurch kann die Speichereinheit austauschbar sein, beispielsweise um eine Alternative und/oder erweiterte Rezeptsammlung auch nach der Inbetriebnahme des Küchengerätes zu ermöglichen. Ein Zwischenspeichern der Einkaufsliste in der Speichereinheit kann beispielsweise ermöglichen, dass die Einkaufsliste zu einem späteren Zeitpunkt weitergeführt wird und somit um Zutaten für weitere Rezepte ergänzt wird. So ist es denkbar, dass die Einkaufsliste zu einem bestimmten Wochentag abgerufen wird, wenn der Benutzer einkaufen geht. Ferner ist es denkbar, dass die Speichereinheit Teil eines externen Servers ist, welcher über die Geräteschnittstelle mit der integrierten Steuereinheit in Kommunikationsverbindung bringbar ist. Dadurch ist Speicherplatz auslagerbar. Weiterhin kann durch das Vorsehen eines Servers zur Bereitstellung der Rezepte z. B. ein Erweitern der Rezeptsammlung vereinfacht sein.

Im Rahmen der Erfindung kann ferner vorgesehen sein, dass die Benutzerschnittstelle eine Displayeinheit umfasst, durch welche die Rezeptsammlung und/oder die rezeptspezifische Zutatenliste und/oder die Einkaufsliste anzeigbar ist. Insbesondere kann die Anzeige in mehreren Teilsegmenten vorgesehen sein. Dadurch kann der Benutzer die rezeptspezifische Zutatenliste und die Einkaufsliste am Gerät überprüfen, bevor diese in fertiggestelltem Zustand an die externe Empfangsvorrichtung übertragen wird. Insbesondere kann vorgesehen sein, dass die Displayeinheit als Touch-Display ausgestaltet ist und die Einkaufsliste und/oder die rezeptspezifische Zutatenliste über die Displayeinheit durch den Benutzer bearbeitbar ist. So kann der Benutzer beispielsweise Zutaten aus der Einkaufsliste schon am Gerät herausstreichen, wenn er diese bereits vorrätig hat, und/oder weitere Zutaten ergänzen.

Vorzugsweise kann bei einem erfindungsgemäßen Küchengerät vorgesehen sein, dass zumindest zwei Rezepte über die Benutzerschnittstelle auswählbar sind, wobei durch die integrierte Steuereinheit für jedes Rezept jeweils eine rezeptspezifische Zutatenliste bestimmbar ist, wobei durch die integrierte Steuereinheit jede rezeptspezifische Zutatenliste in einer separaten Einkaufsliste verarbeitbar ist und/oder die rezeptspezifischen Zutatenlisten durch die integrierte Steuereinheit in der Einkaufsliste zusammenfügbar sind. Ist eine einzelne Einkaufsliste für Zutatenlisten mehrerer Rezepte vorgesehen, hat dies den Vorteil, dass der Benutzer bei einem einzelnen Einkauf eine schnelle Übersicht hat, wie viel er von jeder Zutat für den gesamten Bedarf einkaufen muss. Somit kann die Einkaufsliste insbesondere die Summe der Zutaten mehrerer Rezepte bzw. mehrerer rezeptspezifischer Zutatenlisten enthalten. Insbesondere können auch unterschiedliche Verpackungsgrößen dabei berücksichtigt werden, sodass beispielsweise eine größere Verpackung einer einzelnen Zutat ausreichen kann, um den Bedarf für zwei oder mehr Rezepte zu decken. Zwei separate Einkaufslisten wiederum haben den Vorteil, dass der Benutzer im Supermarkt komfortabel entscheiden kann, ob er für ein bestimmtes Rezept bereits den Einkauf erledigen möchte oder lediglich für ein anderes Rezept einkaufen möchte und den Einkauf für das erste Rezept zu einem späteren Zeitpunkt fortsetzen möchte.

Vorzugsweise kann bei einem erfindungsgemäßen Küchengerät die integrierte Steuereinheit dazu ausgebildet sein, das ausgewählte Rezept derart zu interpretieren, dass die rezeptspezifische Zutatenliste des ausgewählten Rezeptes extrahierbar ist. Die Interpretation kann somit eine textbasierte Analyse des Rezeptes umfassen, wobei das Rezept in einzelne Bereiche und/oder einzelne Worte zerlegt wird und zum Beispiel anhand eines Lexikons oder einer vorgegebenen Bibliothek die Benennung der Zutaten erkannt und einer benötigten Menge zugeordnet werden kann. Ferner ist es denkbar, dass das Rezept Metadaten aufweist, welche die rezeptspezifische Zutatenliste zur Verfügung stellen, sodass lediglich diese Metadaten ausgelesen werden. Weiterhin ist es denkbar, dass das Rezept Anweisungen an den Benutzer und/oder das Küchengerät umfasst, welche von der integrierten Steuereinheit im Hinblick auf die Zutaten interpretiert werden. Derartige Anweisungen können Steuerbefehle des Küchengerätes und/oder eine Text- und/oder Sprachausgabe an den Benutzer umfassen. Dadurch können die Rezepte einfach ausgestaltet sein. Ferner kann es dadurch nicht notwendig sein, dass das Rezept speziell für die Funktion der Einkaufsliste präpariert ist. Vielmehr können einfach erstellbare Standardrezepte somit auch für diese Funktion genutzt werden.

Im Rahmen der Erfindung ist ferner denkbar, dass die integrierte Steuereinheit dazu ausgebildet ist, in der Speichereinheit eine Rezepthistorie abzuspeichern, wobei die Rezepthistorie zuvor ausgewählte Rezepte umfasst und durch die integrierte Steuereinheit in Abhängigkeit von der Rezepthistorie ein Bedarf an Zutaten aus der rezeptspezifischen Zutatenliste für die Einkaufsliste, insbesondere anhand zuvor durchgeführter Rezepte, ermittelbar ist. Die Rezepthistorie kann somit zuvor ausgewählte, insbesondere zuvor ausgeführte, Rezepte umfassen. So ist es denkbar, dass der Benutzer verschiedene Rezepte auswählt und diese in der Rezepthistorie gespeichert werden. Bei der Anzeige kann dadurch eine Priorisierung, insbesondere durch die integrierte Steuereinheit, bewirkt werden, wobei die zuvor ausgewählten Rezepte der Rezepthistorie visuell hervorgehoben und/oder separat von anderen Rezepten angezeigt werden. Ferner kann die Rezepthistorie zuvor durchgeführte Rezepte umfassen, sodass anhand der Rezepthistorie zum einen das Nutzerverhalten nachvollziehbar sein kann und zum anderen anhand der Rezepthistorie ein Vorrat des Benutzers ermittelbar sein kann. Hat der Benutzer beispielsweise zuvor bereits eine Einkaufsliste auf Grundlage ausgewählter Rezepte erstellt, kann vorgesehen sein, dass er diese abarbeitet und die Abarbeitung als vorhandene Vorräte, insbesondere in der Speichereinheit, abgespeichert werden. Führt er schließlich das entsprechende Rezept aus, kann insbesondere in Abhängigkeit von gekauften Verpackungsgrößen ein Restvorrat ermittelbar sein, welcher sich in der Rezepthistorie widerspiegelt. Die vorhandenen Zutaten können entsprechend für neu ausgewählte Rezepte verwendet werden und werden vorzugsweise nicht aus der rezeptspezifischen Zutatenliste in die Einkaufsliste übernommen. Damit kann eine Effizienz der Nutzung der Einkäufe deutlich gesteigert werden.

Im Rahmen der Erfindung kann ferner vorgesehen sein, dass durch die integrierte Steuereinheit das ausgewählte Rezept in einen deaktivierten Zustand bringbar ist und erst dann in einen aktivierten Zustand überführbar ist, wenn die integrierte Steuereinheit eine Bestätigung über eine zumindest teilweise Abarbeitung der Einkaufsliste erhält. Im deaktivierten Zustand kann ein Rezept vorzugsweise für einen Benutzer nicht ausführbar und/oder zumindest als deaktiviert gekennzeichnet sein. Im aktivierten Zustand kann ein Rezept vorzugsweise für einen Benutzer ausführbar und/oder zumindest als aktiviert gekennzeichnet sein. So können dem Benutzer beispielsweise aktivierte Rezepte priorisiert angezeigt werden, für welche die benötigten Zutaten vorhanden sind. Dadurch kann der Benutzer durch das Küchengerät einen Überblick darüber erhalten, welche Rezepte er überhaupt ausführen kann, sodass ein Fehlstart eines Rezeptes, bei welchem erst bei einem späteren Kochschritt festgestellt wird, dass eine bestimmte Zutat fehlt, vermieden wird.

Ferner kann bei einem erfindungsgemäßen Küchengerät vorgesehen sein, dass die integrierte Steuereinheit dazu ausgebildet ist, eine Maßeinheit von Zutaten des ausgewählten Rezeptes in Abhängigkeit von einer Region für die Einkaufsliste automatisch umzurechnen, insbesondere wobei die Region durch die integrierte Steuereinheit automatisch bestimmbar ist. Das automatische Bestimmen der Region kann durch die Geräteschnittstelle, zum Beispiel über die IP-Adresse, erfolgen. Zusätzlich oder alternativ kann eine Positionsbestimmungseinheit vorgesehen sein, welche beispielsweise einen GPS-Sensor zur Bestimmung der Standortdaten des Küchengerätes umfassen kann. Unter der Maßeinheit kann vorzugsweise eine Mengeneinheit und/oder eine Gewichtseinheit verstanden werden. So ist es denkbar, dass die Region "Deutschland" festgestellt wird und die Maßeinheiten der Zutaten, insbesondere in der Einkaufsliste, in SI-Einheiten und/oder lokal üblichen Einkaufsgrößen dargestellt werden. Wird die Region "Großbritannien" ausgewählt, kann durch die integrierte Steuereinheit automatisch eine Umrechnung in ein angloamerikanisches Maßsystem erfolgen. Zusätzlich oder alternativ zur automatischen Bestimmung der Region kann vorgesehen sein, dass die Region voreingestellt ist und/oder durch den Benutzer voreinstellbar ist.

Es ist beim erfindungsgemäßen Küchengerät ferner denkbar, dass die integrierte Steuereinheit dazu ausgebildet ist, eine Bestellung automatisch durch Versenden zumindest eines Teils der Einkaufsliste über die Geräteschnittstelle auszulösen. So kann beispielsweise ein externer Dienst durch das Küchengerät über den versendeten Teil der Einkaufsliste benachrichtigbar sein, sodass automatisch eine Bestellung erfolgt. Somit kann es für den Benutzer ausreichen, bestimmte Rezepte auszuwählen, für welche automatisch die Zutaten bestellt und geliefert werden. Dies kann die einfache Zugänglichkeit zu dieser Funktion des Küchengerätes sowie den Komfort für den Benutzer weiter verbessern.

Gemäß einem weiteren Aspekt der Erfindung ist ein Verfahren zur Einkaufsunterstützung eines Benutzers eines Küchengerätes, insbesondere eines erfindungsgemäßen Küchengerätes, beansprucht. Dabei umfasst das Verfahren die folgenden Schritte:
- Erfassen einer Benutzereingabe,
- Bestimmen zumindest eines durch den Benutzer ausgewählten Rezeptes in Abhängigkeit von der Benutzereingabe Zutatenliste durch eine in das Küchengerät integrierte Steuereinheit,
- Bestimmen einer rezeptspezifischen Zutatenliste des zumindest einen ausgewählten Rezeptes durch die integrierte Steuereinheit,
- Erstellen einer Einkaufsliste aus zumindest der rezeptspezifischen Zutatenliste durch die integrierte Steuereinheit,
- Senden der Einkaufsliste an eine externe Empfangsvorrichtung.

Somit bringt das erfindungsgemäße Verfahren die gleichen Vorteile mit sich, wie sie bereits ausführlich mit Bezug auf ein erfindungsgemäßes Küchengerät beschrieben worden sind. Das Erfassen der Benutzereingabe kann vorzugsweise durch eine Benutzerschnittstelle des Küchengerätes durchgeführt werden. Ferner kann das Bestimmen des ausgewählten Rezeptes und der rezeptspezifischen Zutatenliste ebenfalls durch die integrierte Steuereinheit durchgeführt werden. Das Senden der Einkaufsliste erfolgt vorzugsweise über eine mit der integrierten Steuereinheit verbundene Schnittstelle. Somit kann die Einkaufsunterstützung des Benutzers bereits bei Inbetriebnahme des Küchengerätes für den Benutzer zugänglich sein, insbesondere ohne dass dieser einen Datenabgleich mit einem Server und/oder seinem Profil durchführen muss. Ferner findet er die Funktion im Küchengerät und somit an einem zentralen Ort. Durch das Senden der Einkaufsliste kann dem Benutzer die Einkaufsliste ferner in komfortabler Art und Weise zur Verfügung gestellt werden.

Im Rahmen der Erfindung ist ferner denkbar, dass das Verfahren den folgenden Schritt umfasst:
- Abspeichern des ausgewählten Rezeptes, der rezeptspezifischen Zutatenliste und/oder der Einkaufsliste.

Das Abspeichern kann vorzugsweise in einer Speichereinheit erfolgen und temporär oder dauerhaft vorgesehen sein. Dadurch kann ein späterer Zugriff auf die jeweiligen Daten gewährleistet werden. Dadurch kann es beispielsweise möglich sein, dass mehrere Rezepte nacheinander ausgewählt oder die Zutatenliste und/oder die Einkaufsliste nachträglich verändert werden können.

Bei einem erfindungsgemäßen Verfahren kann ferner vorgesehen sein, dass das Bestimmen der rezeptspezifischen Zutatenliste eine Interpretation des Rezeptes durch die integrierte Steuereinheit umfasst, sodass die rezeptspezifische Zutatenliste des ausgewählten Rezeptes extrahiert wird. Dabei können beispielsweise einzelne Textbausteine des Rezeptes vereinzelt werden und der rezeptspezifischen Zutatenliste zugeordnet werden. Dazu kann beispielsweise eine Erkennung der Einzelbausteine des Rezeptes durchgeführt werden, welche vorzugsweise textbasiert sein kann. Die Extraktion kann auf Anweisungen des Rezeptes, insbesondere audiovisuellen Anweisungen und/oder textbasierten Anweisungen, basieren. Dadurch kann es beispielsweise nicht notwendig sein, dass die Rezepte speziell für die Funktion der Einkaufsliste präpariert sind.

Ferner kann bei einem erfindungsgemäßen Verfahren vorgesehen sein, dass zumindest zwei durch den Benutzer ausgewählte Rezepte in Abhängigkeit von einer oder mehreren Benutzereingaben bestimmt werden und für jedes ausgewählte Rezept eine rezeptspezifische Zutatenliste bestimmt wird, wobei für jede rezeptspezifische Zutatenliste eine separate Einkaufsliste erstellt wird oder die rezeptspezifischen Zutatenlisten in der Einkaufsliste zusammengefügt werden. Dadurch kann eine einzelne Einkaufsliste vom Benutzer für den Einkauf verwendet werden, um mehrere Rezepte durch den Einkauf abzudecken. Alternativ kann eine separate Einkaufsliste für jedes Rezept vorgesehen sein, um beispielsweise noch im Supermarkt zwischen den Rezepten differenzieren zu können.

Im Rahmen der Erfindung ist es ferner denkbar, dass das Verfahren folgende Schritte umfasst:
- Abspeichern einer Rezepthistorie umfassend zuvor ausgewählte Rezepte,
- Ermitteln eines Bedarfs an Zutaten aus der rezeptspezifischen Zutatenliste für die Einkaufsliste anhand der Rezepthistorie.

Das Abspeichern der Rezepthistorie kann beispielsweise immer dann durchgeführt werden, wenn ein neues Rezept ausgewählt und/oder vom Benutzer durchgeführt wird. Somit kann anhand der Rezepthistorie, insbesondere in Kombination mit vorangegangenem Einkaufsverhalten des Benutzers, der Bedarf der Zutaten ermittelt werden. Somit können beispielsweise die Vorräte aus den rezeptspezifischen Zutatenlisten neu ausgewählter Rezepte herausgerechnet werden, um die Einkaufsliste aktuell zu halten. Dadurch kann sich eine effiziente Nutzung der Zutaten und/oder der Einkaufszeit ergeben.

Es ist ferner denkbar, dass ein erfindungsgemäßes Verfahren folgenden Schritt umfasst:
- automatisches Umrechnen einer Maßeinheit von Zutaten des ausgewählten Rezeptes für die Einkaufsliste in Abhängigkeit von einer Region,
insbesondere wobei ein automatisches Bestimmen der Region durch die integrierte Steuereinheit erfolgt. Somit kann die Maßeinheit der Zutaten unmittelbar auf die Bedürfnisse des Benutzers beim Einkaufen zugeschnitten werden und das Küchengerät für den Einsatz in unterschiedlichen Ländern und/oder Regionen geeignet sein. Das automatische Umrechnen kann vorzugsweise ebenfalls durch die integrierte Steuereinheit durchgeführt werden, sodass auch dieser Verfahrensschritt direkt im Küchengerät erfolgt. Das automatische Bestimmen der Region kann durch Ermitteln einer IP-Adresse, eines Standortes, Spracheinstellung, Erkennung eines Benutzers oder dergleichen durchgeführt werden.

Vorzugsweise kann bei einem erfindungsgemäßen Verfahren das Verfahren folgenden Schritt umfassen:
- automatisches Auslösen einer Bestellung von Zutaten zumindest eines Teils der Einkaufsliste.

Vorzugsweise kann die gesamte Einkaufsliste für das automatische Auslösen der Bestellung an einen externen Dienst übersandt werden. Dazu kann insbesondere zuvor eine Bestätigung des Benutzers eingeholt werden, dass die Bestellung ausgelöst werden soll. Somit kann der Benutzer durch weitere Automatisierung in seinem Einkaufsverhalten unterstützt werden, insbesondere wenn die Bestellung dazu führt, dass ein Lieferdienst die benötigten Zutaten liefert.

Im Rahmen der Erfindung kann ferner vorgesehen sein, dass das Verfahren folgenden Schritt umfasst:
- Durchführen eines automatischen Kochvorgangs anhand eines ausgewählten Rezeptes, insbesondere nachdem eine Bestätigung über eine zumindest teilweise Abarbeitung der Einkaufsliste erfolgt ist.

Somit kann die Bestätigung über die zumindest teilweise Abarbeitung der Einkaufsliste vorzugsweise benötigt sein, um den automatischen Kochvorgang manuell zu starten. Der automatische Kochvorgang kann die Vorgabe einzelner durchzuführender Rezeptschritte durch das Küchengerät umfassen. Ferner kann der automatische Kochvorgang die Vorgabe bestimmter Betriebsparameter für den nächsten Kochabschnitt umfassen, welcher durch den Benutzer, beispielsweise über die Benutzerschnittstelle, lediglich gestartet wird. Dadurch kann in einfacher Art und Weise eine Einbindung des Einkaufs in den Kochablauf stattfinden, sodass der Benutzer zumindest eine Warnung erhält, wenn nicht alle Zutaten eingekauft und/oder registriert sind. So kann beispielsweise die Bestätigung automatisch erfolgen, wenn die Einkaufsliste abgearbeitet ist oder manuell, indem eine Warnung dem Benutzer angezeigt wird, wenn der Benutzer den Kochvorgang starten möchte, aber noch nicht alle Einkäufe registriert sind.

Die zuvor beschriebenen Verfahrensschritte können in beliebiger oder in der beschriebenen Reihenfolge durchgeführt werden. Insbesondere können einzelne Schritte oder alle Verfahrensschritte wiederholt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können in den Ansprüchen und in der Beschreibung erwähnte Merkmale kombiniert werden. Es zeigen:
- Figuren 1a-b: ein erfindungsgemäßes Küchengerät in schematischer Darstellung in einem ersten Ausführungsbeispiel,
- Figur 2: eine Datenstruktur einer integrierten Steuereinheit des erfindungsgemäßen Küchengeräts des ersten Ausführungsbeispiels in schematischer Darstellung,
- Figur 3: unterschiedliche Rezeptzustände bei einem erfindungsgemäßen Küchengerät in einem weiteren Ausführungsbeispiel in schematischer Darstellung,
- Figur 4: ein erfindungsgemäßes Verfahren in schematischer Darstellung der Verfahrensschritte in einem weiteren Ausführungsbeispiel.

In den nachfolgenden Figuren werden für die gleichen technischen Merkmale auch von unterschiedlichen Ausführungsbeispielen die identischen Bezugszeichen verwendet.

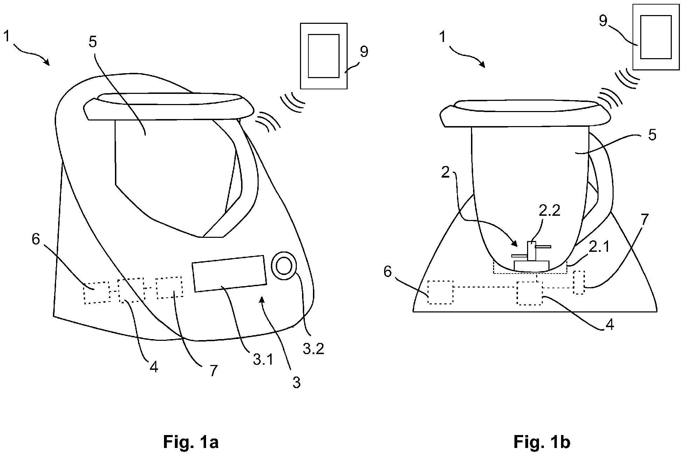

Die Figuren 1a und 1b zeigen ein erfindungsgemäßes Küchengerät 1 zum zumindest teilweise automatisierten Abarbeiten von Rezepten 10. Dazu weist das Küchengerät 1 ein Kochgefäß 5 zur Aufnahme von Zutaten 11 und eine Funktionseinheit 2 zum Verarbeiten der Zutaten 11 beim Abarbeiten der Rezepte 10 auf. Die Funktionseinheit 2 umfasst ein elektrisches Heizelement 2.1 sowie ein elektrisches Rührwerk 2.2. Durch das Heizelement 2.1 können Zutaten 11 in einem Kochgefäß 5 des Küchengerätes 1 erhitzt werden und durch das Rührwerk 2.2 können die Zutaten 11 zerkleinert und/oder durchmischt werden. Die Funktionseinheit 2 ist dabei durch eine integrierte Steuereinheit 4 ansteuerbar, durch welche die Rezepte 10 zumindest teilweise automatisiert durchgeführt werden können. Dazu steht die integrierte Steuereinheit 4 ferner mit einer Benutzerschnittstelle 3 zum Erfassen einer Benutzereingabe 101.1 in Kommunikationsverbindung. Die Benutzerschnittstelle 3 umfasst eine Displayeinheit 3.1 sowie einen Drehknopf 3.2, um die Benutzereingabe 101.1 der integrierten Steuereinheit 4 zur Verfügung stellen zu können. Darüber hinaus ist die integrierte Steuereinheit 4 mit einer Speichereinheit 7 verbunden, in welcher Daten abspeicherbar sind. Im dargestellten Ausführungsbeispiel handelt es sich bei der Speichereinheit 7 um eine integrierte Speichereinheit. Zusätzlich oder alternativ ist es jedoch denkbar, dass die Speichereinheit 7 einen Speicherchip umfasst, welcher lösbar mit dem Küchengerät 1 verbunden ist oder einen Server, welcher über die Geräteschnittstelle 6 mit dem Küchengerät 1 in Kommunikationsverbindung steht. Dadurch können die Daten transportiert bzw. vom Benutzer mitgeführt und/oder ausgetauscht werden. Darüber hinaus ist eine Geräteschnittstelle 6 mit der integrierten Steuereinheit 4 verbunden, sodass die integrierte Steuereinheit 4 mit einer externen Empfangsvorrichtung 9 in Kommunikationsverbindung bringbar ist. Dazu kann es sich bei der Geräteschnittstelle 6 um eine Netzwerkschnittstelle, Bluetooth-Schnittstelle oder dergleichen handeln. Die integrierte Steuereinheit 4 ist ferner derart ausgebildet, dass eine rezeptspezifische Zutatenliste 20 des zumindest einen durch den Benutzer ausgewählten Rezeptes 10 bestimmbar und der externen Empfangsvorrichtung 9 in einer Einkaufsliste 30 über die Geräteschnittstelle 6 zur Verfügung stellbar ist.

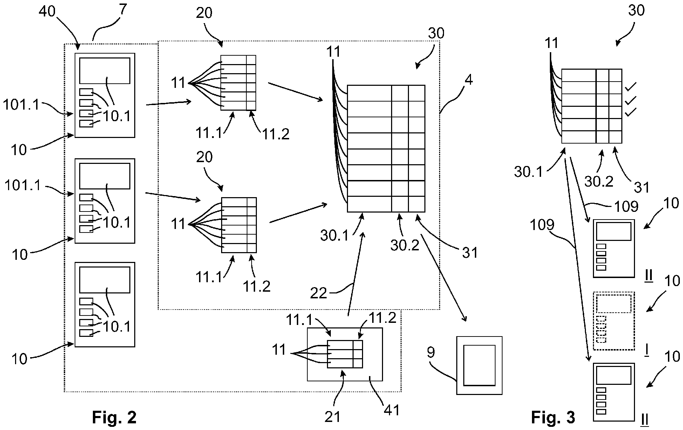

Figur 2 zeigt eine schematische Darstellung einer Datenstruktur zur Erstellung der Einkaufsliste 30 durch die integrierte Steuereinheit 4. Dabei ist eine Rezeptsammlung 40 vorgesehen, welche vorzugsweise in der Speichereinheit 7 abgespeichert ist. Die Rezeptsammlung 40 umfasst mehrere Rezepte 10, von denen der Benutzer durch Benutzereingaben 101.1 beispielsweise zwei Rezepte 10 auswählen kann. Die Rezepte 10 weisen dabei unterschiedliche Rezeptelemente 10.1 auf, welche Anweisungen an den Benutzer, Betriebsparameter des Küchengerätes 1 und/oder dergleichen umfassen können. Um für jedes ausgewählte Rezept 10 eine rezeptspezifische Zutatenliste 20 zu erstellen, werden die Rezepte 10 dabei durch die integrierte Steuereinheit 4 interpretiert, wobei die die Zutaten 11 enthaltenden Rezeptelemente 10.1 isoliert werden und die einzelnen Zutaten 11 schließlich aus den jeweiligen Rezeptelementen 10.1 extrahiert werden. Insbesondere kann jede spezifische Zutatenliste 20 jeweils für jede Zutat 11 eine Bezeichnung 11.1 sowie eine Menge 11.2 umfassen, wobei jede Menge 11.2 einer Bezeichnung 11.1 zugeordnet ist. Die Menge 11.2 kann dabei in einer bestimmten Maßeinheit angegeben sein. Die rezeptspezifischen Zutatenlisten 20 werden schließlich vorzugsweise zu einer einzelnen Einkaufsliste 30 zusammengefasst, wobei jeder benötigten Zutat 11 eine Einkaufsposition 30.1 und eine Einkaufsmenge 30.2 zugeordnet wird. Vorzugsweise kann ferner jeder Zutat 11 eine benötigte Verpackungsgröße 31 zugeordnet werden, welche insbesondere größer oder gleich der Einkaufsmenge 30.2 sein kann. Sofern auch vorhandene Vorräte des Benutzers berücksichtigt werden sollen, kann vorgesehen sein, dass eine vorratsspezifische Zutatenliste 21 vorgesehen ist, welche durch die integrierte Steuereinheit 4 des Küchengerätes 1 bei der Erstellung der Einkaufsliste 30 berücksichtigt wird. Dazu kann die vorratsspezifische Zutatenliste 21, wie auch die rezeptspezifischen Zutatenlisten 20 jeweils mehrere Zutaten 11 umfassen, welche mit der jeweiligen Bezeichnung 11.1 und Menge 11.2 hinterlegt sind. Insbesondere kann die vorratsspezifische Zutatenliste 21 in der Speichereinheit 7 abgespeichert und durch die integrierte Steuereinheit 4 abgerufen werden. Im Gegensatz zu den rezeptspezifischen Zutatenlisten 20 führen Einträge in der vorratsspezifischen Zutatenliste 21 jedoch zu einer Subtraktion der Menge in der Einkaufsliste 30, sodass Zutaten 11, welche bereits vorrätig sind, nicht mehr eingekauft werden müssen und sich somit nicht in der Einkaufsliste 30 widerspiegeln. Somit kann durch die vorratsspezifische Zutatenliste 21 ein Bedarf 22 bestimmter Zutaten 11 ermittelt werden und sich insbesondere von den Mengenangaben in den rezeptspezifischen Zutatenlisten 20 unterscheiden. Die vorratsspezifische Zutatenliste 21 kann sich insbesondere aus einer Rezepthistorie 41 ergeben, in welcher zuvor ausgewählte und/oder zuvor durchgeführte Rezepte 10 des Benutzers abgespeichert sein können. Insbesondere können dabei vorherige Abarbeitungen von früheren Einkaufslisten 30 oder früheren Versionen der Einkaufsliste 30 berücksichtigt sein. Daraufhin kann die Einkaufsliste 30 durch die integrierte Steuereinheit 4 über die Geräteschnittstelle 6 an die externe Empfangsvorrichtung 9 gesendet werden.

Figur 3 zeigt ferner unterschiedliche Zustände I, II von Rezepten 10, wie sie von der integrierten Steuereinheit 4 aufgefasst werden können. So ist es denkbar, dass die Rezepte 10 nach der Auswahl durch eine Benutzereingabe 101.1 in einen deaktivierten Zustand I überführt werden. Erfolgt ferner eine Bestätigung 109 über eine Abarbeitung einer Einkaufsliste 30 für das jeweilige Rezept 10, ist vorgesehen, dieses in einen aktivierten Zustand II zu überführen. Der aktivierte Zustand II kann eine Hervorhebung des Rezeptes 10 auf einem Display 3.1 eines Küchengerätes 1 umfassen. Dadurch kann der Benutzer schnell feststellen, zu welchen Rezepten 10 er bereits alle benötigten Zutaten 11 eingekauft hat. Die Bestätigung 109 kann beispielsweise über eine Geräteschnittstelle 6 des Küchengerätes 1 erfolgen, wobei vorzugsweise eine externe Empfangsvorrichtung 9 die Bestätigung an das Küchengerät 1 sendet. Möchte der Benutzer beispielsweise ein Rezept 10 im deaktivierten Zustand I aufrufen, um dieses auszuführen, kann vorgesehen sein, dass eine Warnung erfolgt und der Benutzer zunächst das Vorhandensein aller Zutaten 11 manuell bestätigen muss.

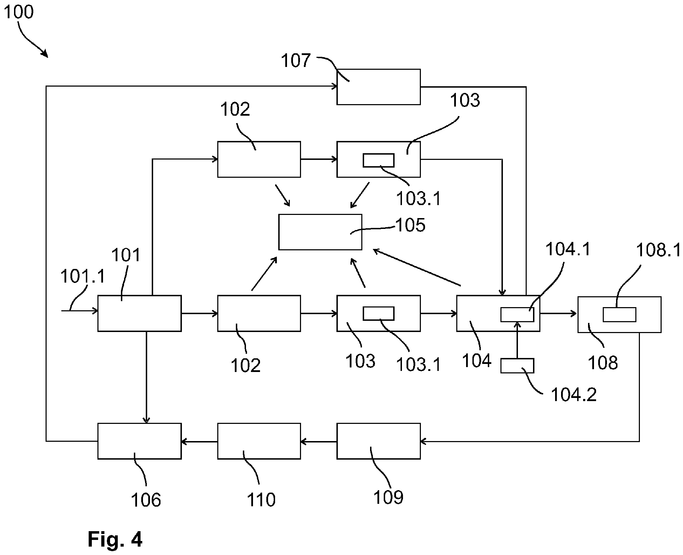

Figur 4 zeigt ferner ein erfindungsgemäßes Verfahren 100 in schematischer Darstellung der Verfahrensschritte. Dabei ist zunächst ein Erfassen 101 einer Benutzereingabe 101.1 vorgesehen, durch welche ein Benutzer ein Rezept 10 auswählt. Die Auswahl des Rezeptes 10 auf Datenebene erfolgt dabei durch eine integrierte Steuereinheit 4 des Küchengerätes 1 über ein Bestimmen 102 zumindest eines durch den Benutzer ausgewählten Rezeptes 10. In der vorliegenden Darstellung erfolgen zwei Benutzereingaben 101.1 und somit eine Bestimmung 102 von zwei Rezepten 10. In Abhängigkeit von jedem der ausgewählten Rezepte 10 wird ferner ein Bestimmen 103 einer rezeptspezifischen Zutatenliste 20 durchgeführt, wobei die Rezepte 10 jeweils durch die integrierte Steuereinheit 4 interpretiert werden, um die rezeptspezifische Zutatenliste 20 zu erstellen. Die Interpretation 103.1 kann beispielsweise ein Zerlegen des Rezeptes 10 in Textbausteine umfassen und/oder zum Erkennen 103 der Zutaten 11 aus Metadaten der Rezepte 10 führen. Daraufhin erfolgt ein Erstellen 104 einer Einkaufsliste 30 aus den rezeptspezifischen Zutatenlisten 20 durch die integrierte Steuereinheit 4. Um die Einkaufsliste 30 zu erstellen, kann ferner ein Bestimmen 104.2 einer Region durchgeführt werden, woraufhin ein Umrechnen 104.1 von Maßeinheiten der rezeptspezifischen Zutatenlisten 20 erfolgt. Ist das Rezept 10 beispielsweise im SI-Einheitensystem erstellt worden, jedoch die Region "Großbritannien" bestimmt worden, kann eine Einheitenumrechnung in ein angloamerikanisches Einheitensystem automatisch durchgeführt werden, um dem Benutzer automatisch die richtige Einkaufsmenge darzulegen. Ferner kann anhand einer Rezepthistorie 41 ein Ermitteln 107 eines Bedarfs 22 an Zutaten 11 für die Einkaufsliste 30 erfolgen. So können beispielsweise vorrätige Zutatenmengen von den rezeptspezifischen Zutatenlisten 20 abgezogen werden, um die Einkaufsliste 30 zu erstellen. Vorzugsweise können die ausgewählten Rezepte 10, die rezeptspezifischen Zutatenlisten 20 und/oder die Einkaufsliste 30 durch Abspeichern 105 in einer Speichereinheit 7 für einen späteren Zeitpunkt zur Verfügung gestellt werden. Daraufhin kann ein Senden 108 der Einkaufsliste 30 an eine externe Empfangsvorrichtung 9 erfolgen, um den Benutzer die Einkaufsliste 30 zur Verfügung zu stellen. So kann die externe Empfangsvorrichtung 9, beispielsweise ein Smartphone, ein Tablet, einen Server, einen Computer oder dergleichen umfassen. Insbesondere kann das Senden 108 der Einkaufsliste 30 ein Auslösen 108.1 einer Bestellung umfassen, wobei die Einkaufsliste 30 zumindest teilweise an einen Lieferdienst gesendet werden kann, um dem Benutzer die Bestellung automatisch zu ermöglichen. Durch die automatische Bestellung und/oder eine manuelle Benutzereingabe 101.1 kann ferner eine Bestätigung 109 über eine Abarbeitung der Einkaufsliste 30 erfolgen, welche vorzugsweise notwendig sein kann, um einen automatischen Kochvorgang eines Rezeptes 10 durchzuführen. Wenn das Durchführen 110 eines der Rezepte 10 erfolgt, kann ein Abspeichern 106 dieses Status in der Rezepthistorie 41 vermerkt werden, sodass der Bedarf 22 entsprechend der verbrauchten Zutaten 11 aktualisiert werden kann. Im vorliegenden Ausführungsbeispiel ist die Einkaufsliste 30 als eine einzelne Einkaufsliste dargestellt, wobei es zusätzlich oder alternativ jedoch ebenfalls denkbar ist, dass für jedes Rezept 10 eine einzelne Einkaufsliste erstellt wird, sodass der Benutzer auf unterschiedliche Einkaufslisten für einzelne Rezepte zurückgreifen kann. Ferner ist es denkbar, dass das in Figur 4 dargestellte Verfahren 100 auf einem Küchengerät 1 gemäß dem ersten Ausführungsbeispiel durchgeführt wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, miteinander kombiniert werden.

### Bezuaszeichenliste

- 1: Küchengerät
- 2: Funktionseinheit
- 2.1: Heizelement
- 2.2: Rührwerk
- 3: Benutzerschnittstelle
- 3.1: Displayeinheit
- 3.2: Drehknopf
- 4: integrierte Steuereinheit
- 5: Kochgefäß
- 6: Geräteschnittstelle
- 7: Speichereinheit

- 9: externe Empfangsvorrichtung

- 10: Rezept
- 10.1: Rezeptelement
- 11: Zutat
- 11.1: Bezeichnung
- 11.2: Menge

- 20: rezeptspezifische Zutatenliste
- 21: vorratsspezifische Zutatenliste
- 22: Bedarf

- 30: Einkaufsliste
- 30.1: Einkaufsposition
- 30.2: Einkaufsmenge
- 31: Verpackungsgröße

- 40: Rezeptsammlung
- 41: Rezepthistorie

- 100: Verfahren
- 101: Erfassen von 101.1
- 101.1: Benutzereingabe
- 102: Bestimmen von 10
- 103: Bestimmen von 20
- 103.1: Interpretation von 10
- 104: Erstellen von 30
- 104.1: Umrechnen
- 104.2: Bestimmen einer Region
- 105: Abspeichern von 10, 20 und/oder 30
- 106: Abspeichern von 41
- 107: Ermitteln eines Bedarfs von 11
- 108: Senden von 30
- 108.1: Auslösen einer Bestellung
- 109: Bestätigung über Abarbeitung
- 110: Durchführen von 10

- I: deaktivierter Zustand
- II: aktivierter Zustand

## Patentansprüche

1. Küchengerät (1) zum zumindest teilweise automatisierten Abarbeiten von Rezepten (10) aufweisend eine elektrische Funktionseinheit (2) zum Verarbeiten von Zutaten beim Abarbeiten der Rezepte (10),
eine Benutzerschnittstelle (3) zum Erfassen einer Benutzereingabe (101.1),
eine integrierte Steuereinheit (4), durch welche in Abhängigkeit von der Benutzereingabe (101.1) zumindest ein Rezept (10) auswählbar und die elektrische Funktionseinheit (2) ansteuerbar ist,
wobei die elektrische Funktionseinheit (2) ein elektrisch angetriebenes Rührwerk (2.2) zum Durchmischen von Zutaten und/oder ein elektrisches Heizelement (2.1) zum Erwärmen von Zutaten umfasst, wobei durch die elektrische Funktionseinheit (2) einige oder sämtliche Schritte beim Abarbeiten der Rezepte (10) automatisiert durchführbar sind, dadurch gegenzeichnet, dass
die integrierte Steuereinheit (4) derart ausgebildet ist, dass eine rezeptspezifische Zutatenliste (20) des zumindest einen Rezeptes (10) bestimmbar und einer externen Empfangsvorrichtung (9) in einer Einkaufsliste (30) über eine mit der integrierten Steuereinheit (4) verbundene Geräteschnittstelle (6) zur Verfügung stellbar ist.

2. Küchengerät (1) nach Anspruch 1,
**dadurch gekennzeichnet,**
**dass** die Einkaufsliste (30) durch die integrierte Steuereinheit (4) in Abhängigkeit von vorgegebenen Verpackungsgrößen (31) der Zutaten (11) erstellbar ist, insbesondere wobei die Verpackungsgrößen (31) über die Geräteschnittstelle (6) automatisch beziehbar sind.

3. Küchengerät (1) nach einem der Ansprüche 1 oder 2,
**dadurch gekennzeichnet,**
**dass** eine Speichereinheit (7) mit der integrierten Steuereinheit (4) in Kommunikationsverbindung bringbar ist, in welcher zumindest das ausgewählte Rezept (10), eine vordefinierte Rezeptsammlung (40) und/oder die Einkaufsliste (30) abspeicherbar ist.

4. Küchengerät (1) nach einem der vorhergehenden Ansprüche,
**dadurch gekennzeichnet,**
**dass** die Benutzerschnittstelle (3) eine Displayeinheit (3.1) umfasst, durch welche die Rezeptsammlung (40) und/oder die rezeptspezifische Zutatenliste (20) und/oder die Einkaufsliste (30) anzeigbar ist.

5. Küchengerät (1) nach einem der vorhergehenden Ansprüche,
**dadurch gekennzeichnet,**
**dass** zumindest zwei Rezepte (10) über die Benutzerschnittstelle (3) auswählbar sind, wobei durch die integrierte Steuereinheit (4) für jedes Rezept (10) jeweils eine rezeptspezifische Zutatenliste (20) bestimmbar ist, wobei durch die integrierte Steuereinheit (4) jede rezeptspezifische Zutatenliste (20) in einer separaten Einkaufsliste (30) verarbeitbar ist und/oder die rezeptspezifischen Zutatenlisten (20) in der Einkaufsliste (30) zusammenfügbar sind.

6. Küchengerät (1) nach einem der vorhergehenden Ansprüche,
**dadurch gekennzeichnet,**
**dass** die integrierte Steuereinheit (4) dazu ausgebildet ist, das ausgewählte Rezept (10) derart zu interpretieren, dass die rezeptspezifische Zutatenliste (20) des ausgewählten Rezeptes (10) extrahierbar ist.

7. Küchengerät (1) nach einem der vorhergehenden Ansprüche,
**dadurch gekennzeichnet,**
**dass** die integrierte Steuereinheit (4) dazu ausgebildet ist, in der Speichereinheit (7) eine Rezepthistorie (41) abzuspeichern, wobei die Rezepthistorie (41) zuvor ausgewählte Rezepte (10) umfasst und durch die integrierte Steuereinheit (4) in Abhängigkeit von der Rezepthistorie (41) ein Bedarf an Zutaten (11) aus der rezeptspezifischen Zutatenliste (20) für die Einkaufsliste (30), insbesondere anhand zuvor durchgeführter Rezepte (10), ermittelbar ist.

8. Küchengerät (1) nach einem der vorhergehenden Ansprüche,
**dadurch gekennzeichnet,**
**dass** durch die integrierte Steuereinheit (4) das ausgewählte Rezept (10) in einen deaktivierten Zustand (I) bringbar ist und erst dann in einen aktivierten Zustand (II) überführbar ist, wenn die integrierte Steuereinheit (4) eine Bestätigung (109) über eine zumindest teilweise Abarbeitung der Einkaufsliste (30) erhält.

9. Küchengerät (1) nach einem der vorhergehenden Ansprüche,
**dadurch gekennzeichnet,**
**dass** die integrierte Steuereinheit (4) dazu ausgebildet ist, eine Maßeinheit von Zutaten (11) des ausgewählten Rezeptes (10) in Abhängigkeit von einer Region für die Einkaufsliste (30) automatisch umzurechnen, insbesondere wobei die Region durch die integrierte Steuereinheit (4) automatisch bestimmbar ist.

10. Küchengerät (1) nach einem der vorhergehenden Ansprüche,
**dadurch gekennzeichnet,**
**dass** die integrierte Steuereinheit (4) dazu ausgebildet ist, eine Bestellung automatisch durch Versenden zumindest eines Teils der Einkaufsliste (30) über die Geräteschnittstelle (6) auszulösen.

11. Verfahren (100) zur Einkaufsunterstützung eines Benutzers des Küchengerätes (1)
nach einem der vorhergehenden Ansprüche umfassend die folgenden Schritte:
- Erfassen (101) einer Benutzereingabe (101.1),
- Bestimmen (102) zumindest eines durch den Benutzer ausgewählten Rezeptes (10) in Abhängigkeit von der Benutzereingabe (101.1) durch die in das Küchengerät (1) integrierte Steuereinheit (4),
- Bestimmen (103) einer rezeptspezifischen Zutatenliste (20) des zumindest einen ausgewählten Rezeptes (10) durch die integrierte Steuereinheit (4),
- Erstellen (104) einer Einkaufsliste (30) aus zumindest der rezeptspezifischen Zutatenliste (20) durch die integrierte Steuereinheit (4),
- Senden (108) der Einkaufsliste (30) an eine externe Empfangsvorrichtung (9).

12. Verfahren (100) nach Anspruch 11,
**dadurch gekennzeichnet,**
**dass** das Verfahren (100) folgenden Schritt umfasst:
- Abspeichern (105) des ausgewählten Rezeptes (10), der rezeptspezifischen Zutatenliste (20) und/oder der Einkaufsliste (30).

13. Verfahren (100) nach einem der Ansprüche 11 oder 12,
**dadurch gekennzeichnet,**
**dass** das Bestimmen (103) der rezeptspezifischen Zutatenliste (20) eine Interpretation (103.1) des Rezeptes (10) durch die integrierte Steuereinheit (4) umfasst, so dass die rezeptspezifische Zutatenliste (20) des ausgewählten Rezeptes (10) extrahiert wird.

14. Verfahren (100) nach einem der Ansprüche 11 bis 13,
**dadurch gekennzeichnet,**
**dass** zumindest zwei durch den Benutzer ausgewählte Rezepte (10) in Abhängigkeit von einer oder mehreren Benutzereingaben (101.1) bestimmt werden und für jedes ausgewählte Rezept (10) eine rezeptspezifische Zutatenliste (20) bestimmt wird, wobei für jede rezeptspezifische Zutatenliste (20) eine separate Einkaufsliste (30) erstellt wird oder die rezeptspezifischen Zutatenlisten (20) in der Einkaufsliste (30) zusammengefügt werden.

15. Verfahren (100) nach einem der Ansprüche 11 bis 14,
**dadurch gekennzeichnet,**
**dass** das Verfahren (100) folgende Schritte umfasst:
- Abspeichern (106) einer Rezepthistorie (41) umfassend zuvor ausgewählte Rezepte (10),
- Ermitteln (107) eines Bedarfs an Zutaten (11) aus der rezeptspezifischen Zutatenliste (20) für die Einkaufsliste (30) anhand der Rezepthistorie (41).

16. Verfahren (100) nach einem der Ansprüche 11 bis 15,
**dadurch gekennzeichnet,**
**dass** das Verfahren (100) folgenden Schritt umfasst:
- Automatisches Umrechnen (104.1) einer Maßeinheit von Zutaten des ausgewählten Rezeptes (10) für die Einkaufsliste (30) in Abhängigkeit von einer Region,
insbesondere wobei ein automatisches Bestimmen (104.2) der Region durch die integrierte Steuereinheit (4) erfolgt.

17. Verfahren (100) nach einem der Ansprüche 11 bis 16,
**dadurch gekennzeichnet,**
**dass** das Verfahren (100) folgenden Schritt umfasst:
- Automatisches Auslösen (108.1) einer Bestellung von Zutaten (11) zumindest eines Teils der Einkaufsliste (30).

18. Verfahren (100) nach einem der Ansprüche 11 bis 17,
**dadurch gekennzeichnet,**
**dass** das Verfahren (100) folgenden Schritt umfasst:
- Durchführen (110) eines automatischen Kochvorgangs anhand des ausgewählten Rezeptes (10), insbesondere nachdem eine Bestätigung (109) über eine zumindest teilweise Abarbeitung der Einkaufsliste (30) erfolgt ist.

## Claims

1. Kitchen appliance (1) for the at least partially automated processing of recipes (10), comprising
an electrical functional unit (2) for processing ingredients when processing the recipes (10),
a user interface (3) for capturing a user input (101.1),
an integrated control unit (4), by means of which at least one recipe (10) can be selected and the electrical functional unit (2) can be controlled as a function of the user input (101.1),
wherein the electrical functional unit (2) comprises an electrically driven agitator (2.2) for mixing ingredients and/or an electrical heating element (2.1) for heating ingredients, wherein some or all of the steps in processing the recipes (10) can be carried out automatically by the electrical functional unit (2),
**characterized in that**
the integrated control unit (4) is designed such that a recipe-specific ingredient list (20) of the at least one recipe (10) can be determined and made available to an external receiving device (9) in a shopping list (30) via a device interface (6) connected to the integrated control unit (4).

2. Kitchen appliance (1) according to claim 1,
**characterized in that**
the shopping list (30) can be created by the integrated control unit (4) as a function of predetermined packaging sizes (31) of the ingredients (11), in particular wherein the packaging sizes (31) can be obtained automatically via the device interface (6).

3. Kitchen appliance (1) according to one of claims 1 or 2,
**characterized in that**
a memory unit (7) can be brought into communication with the integrated control unit (4), in which at least the selected recipe (10), a predefined recipe collection (40) and/or the shopping list (30) can be stored.

4. Kitchen appliance (1) according to one of the preceding claims,
**characterized in that**
the user interface (3) comprises a display unit (3.1) by means of which the recipe collection (40) and/or the recipe-specific ingredient list (20) and/or the shopping list (30) can be displayed.

5. Kitchen appliance (1) according to one of the preceding claims,
**characterized in that**
at least two recipes (10) can be selected via the user interface (3), wherein a recipe-specific ingredient list (20) can be determined for each recipe (10) by the integrated control unit (4), wherein each recipe-specific ingredient list (20) can be processed in a separate shopping list (30) by the integrated control unit (4) and/or the recipe-specific ingredient lists (20) can be combined in the shopping list (30).

6. Kitchen appliance (1) according to one of the preceding claims,
**characterized in that**
the integrated control unit (4) is designed to interpret the selected recipe (10) in such a way that the recipe-specific ingredient list (20) of the selected recipe (10) can be extracted.

7. Kitchen appliance (1) according to one of the preceding claims,
**characterized in that**
the integrated control unit (4) is designed to store a recipe history (41) in the memory unit (7), the recipe history (41) comprising previously selected recipes (10) and it being possible for the integrated control unit (4) to determine a requirement for ingredients (11) from the recipe-specific ingredient list (20) for the shopping list (30) as a function of the recipe history (41), in particular on the basis of previously executed recipes (10).

8. Kitchen appliance (1) according to one of the preceding claims,
**characterized in that**
the selected recipe (10) can be brought into a deactivated state (I) by the integrated control unit (4) and can only be transferred to an activated state (II) when the integrated control unit (4) receives a confirmation (109) that the shopping list (30) has been at least partially processed.

9. Kitchen appliance (1) according to one of the preceding claims,
**characterized in that**
the integrated control unit (4) is designed to automatically convert a unit of measurement of ingredients (11) of the selected recipe (10) as a function of a region for the shopping list (30), in particular wherein the region can be automatically determined by the integrated control unit (4).

10. Kitchen appliance (1) according to one of the preceding claims,
**characterized in that**
the integrated control unit (4) is designed to trigger an order automatically by sending at least part of the shopping list (30) via the device interface (6).

11. A method (100) for shopping assistance to a user of the kitchen appliance (1) according to any one of the preceding claims, comprising the following steps:
- Capturing (101) a user input (101.1),
- Determination (102) of at least one recipe (10) selected by the user as a function of the user input (101.1) by the control unit (4) integrated in the kitchen appliance (1),
- Determining (103) a recipe-specific ingredient list (20) of the at least one selected recipe (10) by the integrated control unit (4),
- Creation (104) of a shopping list (30) from at least the recipe-specific ingredient list (20) by the integrated control unit (4),
- Sending (108) the shopping list (30) to an external receiving device (9).

12. The method (100) according to claim 11,
**characterized in that**
the method (100) comprises the following step:
- Storing (105) the selected recipe (10), the recipe-specific ingredient list (20) and/or the shopping list (30).

13. The method (100) according to any one of claims 11 or 12,
**characterized in that**
the determination (103) of the recipe-specific ingredient list (20) comprises an interpretation (103.1) of the recipe (10) by the integrated control unit (4), so that the recipe-specific ingredient list (20) of the selected recipe (10) is extracted.

14. The method (100) according to any one of claims 11 to 13,
**characterized in that**
at least two recipes (10) selected by the user are determined as a function of one or more user inputs (101.1) and a recipe-specific ingredient list (20) is determined for each selected recipe (10), a separate shopping list (30) being created for each recipe-specific ingredient list (20) or the recipe-specific ingredient lists (20) being combined in the shopping list (30).

15. The method (100) according to any one of claims 11 to 14,
**characterized in that**
the method (100) comprises the following steps:
- Storing (106) a recipe history (41) comprising previously selected recipes (10),
- Determining (107) a requirement for ingredients (11) from the recipe-specific ingredient list (20) for the shopping list (30) using the recipe history (41).

16. The method (100) according to any one of claims 11 to 15,
**characterized in that**
the method (100) comprises the following step:
- Automatic conversion (104.1) of a unit of measurement of ingredients of the selected recipe (10) for the shopping list (30) depending on a region,
in particular wherein automatic determination (104.2) of the region is performed by the integrated control unit (4).

17. The method (100) according to any one of claims 11 to 16,
**characterized in that**
the method (100) comprises the following step:
- Automatically triggering (108.1) an order for ingredients (11) of at least part of the shopping list (30).

18. The method (100) according to any one of claims 11 to 17,
**characterized in that**
the method (100) comprises the following step:
- Performing (110) an automatic cooking process using the selected recipe (10), in particular after confirmation (109) that the shopping list (30) has been at least partially processed.

## Revendications

1. Appareil de cuisine (1) pour le traitement au moins partiellement automatisé de recettes (10), présentant
une unité fonctionnelle électrique (2) pour le traitement d'ingrédients lors de l'exécution des recettes (10),
une interface utilisateur (3) pour détecter une entrée utilisateur (101.1),
une unité de commande intégrée (4), par laquelle au moins une recette (10) peut être sélectionnée et l'unité fonctionnelle électrique (2) peut être commandée en fonction de l'entrée de l'utilisateur (101.1),
l'unité fonctionnelle électrique (2) comprenant un agitateur (2.2) à entraînement électrique pour mélanger des ingrédients et/ou un élément chauffant électrique (2.1) pour chauffer des ingrédients, certaines ou toutes les étapes lors du traitement des recettes (10) pouvant être exécutées de manière automatisée par l'unité fonctionnelle (2),
**caractérisé en ce que**
l'unité de commande intégrée (4) est conçue de telle sorte qu'une liste d'ingrédients (20) spécifique à la recette de l'au moins une recette (10) peut être déterminée et mise à la disposition d'un dispositif de réception externe (9) dans une liste d'achats (30) via une interface d'appareil (6) reliée à l'unité de commande intégrée (4).

2. Appareil de cuisine (1) selon la revendication 1,
**caractérisé en ce que**
la liste d'achats (30) peut être établie par l'unité de commande intégrée (4) en fonction de tailles d'emballage (31) prédéfinies des ingrédients (11), en particulier les tailles d'emballage (31) pouvant être obtenues automatiquement via l'interface d'appareil (6).

3. Appareil de cuisine (1) selon l'une des revendications 1 ou 2,
**caractérisé en ce qu'**
une unité de mémoire (7) peut être mise en liaison de communication avec l'unité de commande intégrée (4), dans laquelle au moins la recette sélectionnée (10), une collection de recettes prédéfinie (40) et/ou la liste d'achats (30) peuvent être mémorisées.

4. Appareil de cuisine (1) selon l'une quelconque des revendications précédentes,
**caractérisé en ce que**
l'interface utilisateur (3) comprend une unité d'affichage (3.1) par laquelle la collection de recettes (40) et/ou la liste d'ingrédients (20) spécifique à la recette et/ou la liste d'achats (30) peuvent être affichées.

5. Appareil de cuisine (1) selon l'une quelconque des revendications précédentes,
**caractérisé en ce qu'**
au moins deux recettes (10) peuvent être sélectionnées par l'intermédiaire de l'interface utilisateur (3), une liste d'ingrédients (20) spécifique à la recette pouvant être déterminée par l'unité de commande intégrée (4) pour chaque recette (10), chaque liste d'ingrédients (20) spécifique à la recette pouvant être traitée par l'unité de commande intégrée (4) dans une liste d'achats (30) séparée et/ou les listes d'ingrédients (20) spécifiques à la recette pouvant être réunies dans la liste d'achats (30).

6. Appareil de cuisine (1) selon l'une quelconque des revendications précédentes,
**caractérisé en ce que**
l'unité de commande intégrée (4) est conçue pour interpréter la recette sélectionnée (10) de telle sorte que la liste d'ingrédients (20) spécifique à la recette de la recette sélectionnée (10) puisse être extraite.

7. Appareil de cuisine (1) selon l'une quelconque des revendications précédentes,
**caractérisé en ce que**
l'unité de commande intégrée (4) est conçue pour mémoriser dans l'unité de mémoire (7) un historique de recettes (41), l'historique de recettes (41) comprenant des recettes (10) sélectionnées au préalable et un besoin en ingrédients (11) pouvant être déterminé par l'unité de commande intégrée (4) en fonction de l'historique de recettes (41) à partir de la liste d'ingrédients (20) spécifique aux recettes pour la liste d'achats (30), en particulier à l'aide de recettes (10) exécutées au préalable.

8. Appareil de cuisine (1) selon l'une quelconque des revendications précédentes,
**caractérisé en ce que**
par l'unité de commande intégrée (4), la recette sélectionnée (10) peut être amenée dans un état désactivé (I) et ne peut être transférée dans un état activé (II) que lorsque l'unité de commande intégrée (4) reçoit une confirmation (109) d'un traitement au moins partiel de la liste d'achats (30).

9. Appareil de cuisine (1) selon l'une quelconque des revendications précédentes,
**caractérisé en ce que**
l'unité de commande intégrée (4) est conçue pour convertir automatiquement une unité de mesure d'ingrédients (11) de la recette sélectionnée (10) en fonction d'une région pour la liste d'achats (30), la région pouvant notamment être déterminée automatiquement par l'unité de commande intégrée (4).

10. Appareil de cuisine (1) selon l'une quelconque des revendications précédentes,
**caractérisé en ce que**
l'unité de commande intégrée (4) est conçue pour déclencher automatiquement une commande par l'envoi d'au moins une partie de la liste d'achats (30) via l'interface d'appareil (6).

11. Procédé (100) d'aide à l'achat d'un utilisateur de l'appareil de cuisine (1) selon l'une des revendications précédentes comprenant les étapes suivantes :
- Détecter (101) une entrée d'utilisateur (101.1),
- Déterminer (102) au moins une recette (10) sélectionnée par l'utilisateur en fonction de l'entrée utilisateur (101.1) par l'unité de commande (4) intégrée dans l'appareil de cuisine (1),
- Déterminer (103) une liste d'ingrédients (20) spécifique à la recette de l'au moins une recette (10) sélectionnée par l'unité de commande intégrée (4),
- Création (104) d'une liste d'achats (30) à partir d'au moins la liste d'ingrédients (20) spécifique à la recette par l'unité de commande intégrée (4),
- Envoyer (108) la liste d'achats (30) à un dispositif de réception externe (9).

12. Procédé (100) selon la revendication 11,
**caractérisé en ce que**
le procédé (100) comprend l'étape suivante :
- Mémoriser (105) la recette sélectionnée (10), la liste d'ingrédients (20) spécifique à la recette et/ou la liste d'achats (30).

13. Procédé (100) selon l'une des revendications 11 ou 12,
**caractérisé en ce que**
la détermination (103) de la liste d'ingrédients (20) spécifique à la recette comprend une interprétation (103.1) de la recette (10) par l'unité de commande intégrée (4), de sorte que la liste d'ingrédients (20) spécifique à la recette de la recette sélectionnée (10) est extraite.

14. Procédé (100) selon l'une quelconque des revendications 11 à 13,
**caractérisé en ce qu'**
au moins deux recettes (10) sélectionnées par l'utilisateur sont déterminées en fonction d'une ou de plusieurs entrées d'utilisateur (101.1) et qu'une liste d'ingrédients (20) spécifique à la recette est déterminée pour chaque recette (10) sélectionnée, une liste d'achat (30) séparée étant établie pour chaque liste d'ingrédients (20) spécifique à la recette ou les listes d'ingrédients (20) spécifiques à la recette étant réunies dans la liste d'achat (30).

15. Procédé (100) selon l'une quelconque des revendications 11 à 14,
**caractérisé en ce que**
le procédé (100) comprend les étapes suivantes :
- Mémoriser (106) un historique de recettes (41) comprenant des recettes (10) préalablement sélectionnées,
- Déterminer (107) un besoin en ingrédients (11) à partir de la liste d'ingrédients (20) spécifique à la recette pour la liste d'achats (30) à l'aide de l'historique de recettes (41).

16. Procédé (100) selon l'une quelconque des revendications 11 à 15,
**caractérisé en ce que**
le procédé (100) comprend l'étape suivante :
- Conversion automatique (104.1) d'une unité de mesure d'ingrédients de la recette sélectionnée (10) pour la liste d'achats (30) en fonction d'une région,
en particulier, une détermination automatique (104.2) de la région étant effectuée par l'unité de commande intégrée (4).

17. Procédé (100) selon l'une quelconque des revendications 11 à 16,
**caractérisé en ce que**
le procédé (100) comprend l'étape suivante :
- Déclencher automatiquement (108.1) une commande d'ingrédients (11) d'au moins une partie de la liste d'achats (30).

18. Procédé (100) selon l'une quelconque des revendications 11 à 17,
**caractérisé en ce que**
le procédé (100) comprend l'étape suivante :
- Exécuter (110) un processus de cuisson automatique à l'aide de la recette (10) sélectionnée, notamment après qu'une confirmation (109) d'un traitement au moins partiel de la liste d'achats (30) a été effectuée.
